# EUROPEAN PATENT SPECIFICATION

(11) **EP 1 439 536 B1**
(45) Date of publication and mention of the grant of the patent: **29.07.2015**
(21) Application number: 03001133.2
(22) Date of filing: 20.01.2003
(51) Int. Cl.: G11B 20/14, G11B 27/19, G11B 27/24

(54) **Sampling clock generation for BCA data decoding**
Abtasttakterzeugung zur Dekodierung von BCA-Daten
Génération de l'horloge d'échantillonnage pour le décodage de données BCA

(43) Date of publication of application: 21.07.2004
(73) Proprietor: Media Tek Inc., Hsin Chu City, Taiwan 300 (CN)
(72) Inventor: Hou, Kuen-suey, Yun Lin County Taiwan (CN); Hsieh, Kun-Hung c/o Medi Tek Inc., Hsin Chu City Taiwan 300 (CN)
(74) Representative: Urner, Peter

(56) References cited:
- EP-A- 0 454 955
- TW-Y- 467 370
- US-A1- 2001 021 144
- US-A1- 2002 057 638
- US-A1- 2003 002 410
- US-B1- 6 618 333
- PATENT ABSTRACTS OF JAPAN vol. 1999, no. 08, 30 June 1999 (1999-06-30) & JP 11 073648 A (TOSHIBA CORP), 16 March 1999 (1999-03-16)

## Description

### BACKGROUND OF THE INVENTION

### FIELD OF THE INVENTION

The invention relates generally to a sampling clock generator for BCA data decoding, and in particular to a sampling clock generator for BCA data decoding using a speed indicating signal of a spindle motor to generate a sampling clock.

### DESCRIPTION OF THE RELATED ART

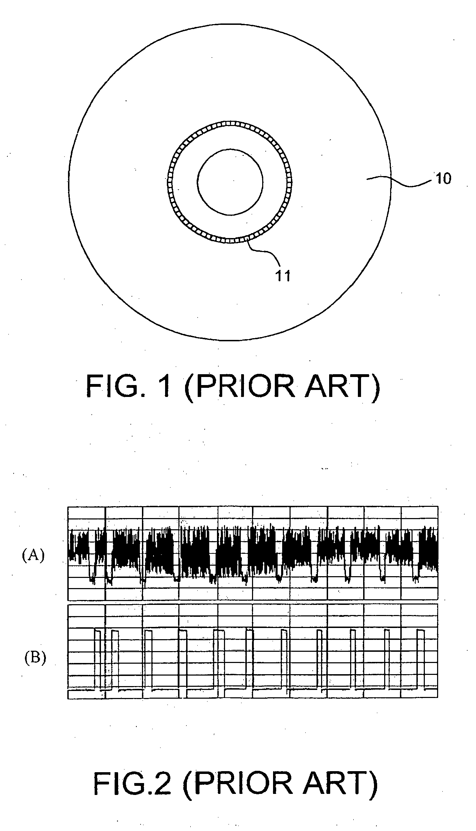

Currently, digital video optical disks or digital versatile disks (hereinafter referred to as DVDs) include DVD-ROM (Read Only Memory), DVD-R (Recordable), and DVD-RAM (Random Access Memory). In the development of DVD-ROM, a burst cutting area (BCA) is provided on the optical disk for data writing so as to mark individual information on each optical disk. As shown in FIG. 1, the BCA 11 of the optical disk 10 is positioned away from the disk center by 22.3 (+0/-0.4) mm to 23.50±0.5 mm. Each BCA data bit is encoded from two BCA channel bits. Channel bits "10" represent a data bit "0," while channel bits "01" represent a data bit "1." In the BCA data writing method, a laser beam is employed to remove the reflection film on a portion of the BCA in a radiation direction. The length and gap of the removed reflection film is dominated by the RZ (Return to Zero) modulation of the channel bit. Since a dummy pit string already exists in the original BCA, the RF (radio frequency) signal read by the optical head for the BCA data includes not only a BCA stripe signal but also a high-frequency pit string signal, as shown in FIG. 2(A). Thereafter, a BCA signal reproduction device is employed to process the RF signal and to generate the BCA reproducing signal, as shown in FIG. 2(B).

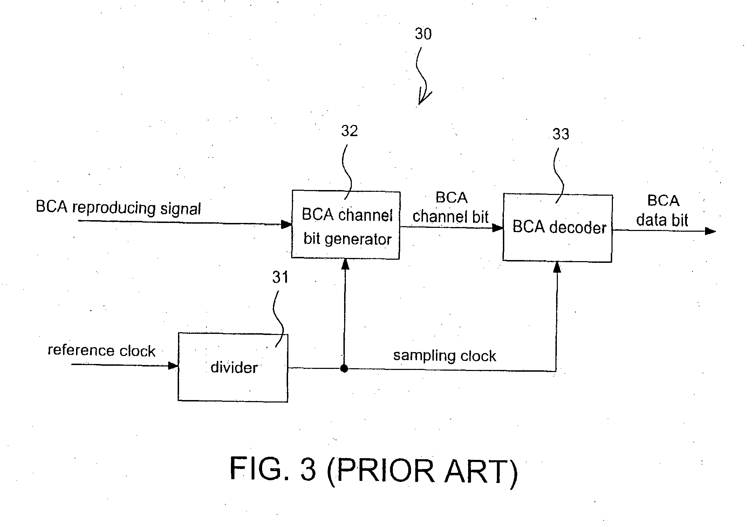

FIG. 3 is a block diagram showing a conventional apparatus for retrieving the BCA signal. As shown in FIG. 3, the BCA data bit retrieving device 30 utilizes a BCA channel bit generator 32 to sample the BCA reproducing signal based on a sampling clock. The BCA reproducing signal is then subjected to a RZ demodulation to become a BCA channel bit. Next, the BCA decoder 33 decodes the BCA channel bit to generate a BCA data bit. One method for generating a sampling clock is to use a reference clock whose frequency is divided in the frequency divider 31. However, the method has to make sure that the disk rotating speed meets a predefined value. If the disk rotating speed deviates from the predefined value, the BCA channel bit generator 32 may not correctly sample the BCA reproducing signal based on the sampling clock because the frequency of the BCA reproducing signal changes with the variation of the disk rotating speed.

Although a PLL (Phase Locked Loop) circuit may be employed to generate the sampling clock according to the BCA reproducing signal, the PLL circuit is complicated and expensive. In addition, U.S. Patent No. 6,034,934, entitled "DISC REPRODUCTION APPARATUS," also discloses a method for generating the sampling clock by calculating the edge interval. In such a method, however, additional firmware or circuitry is required, and the cost thereof is high accordingly.

US 2002/0057638 A describes a method and a control circuit for controlling a BCA clock to read a BCA data on an optical medium. A BCA clock extractor is used for reading the BCA data correctly. A proper clock modulation is performed through this BCA clock extractor so as to read BCA data correctly.

TW 467370 discloses according to a BCA reference clock generating circuit, wherein a reference clock, which is the original reference clock used in the spindle control circuit, is used as a BCA reference clock after being divided by a first divider. Then, the BCA reference clock is received by a BCA data slicer, which also receives EFM data, i.e. the original optic disk digital data signal (BCA reproducing signal). Here, in the BCA data slicer, the BCA reference clock serves to count the EFM data and detects lower reflectance stripes. Furthermore, EFM data corresponds to the BCA reference clock that is derived from the reference clock for generating a control driving clock for the spindle control circuit.

### SUMMARY OF THE INVENTION

The object underlying the present invention is to provide a method for generating a sampling clock for BCA data decoding and a corresponding sampling clock generator to be used in an apparatus for retrieving the BCA signal that ensures reliable and correct decoding BCA data form a BCA reproducing signal even if the disc rotating speed varies.

This object is achieved by the subject matter of the independent claims.

In particular, the sampling clock generator of the invention includes a frequency counter, a divider and a variable frequency divider. The frequency counter receives a FG signal, counts a number of pulses of a reference clock corresponding to each period of the FG signal, and generates a counting value. The divider receives the counting value of the frequency counter and divides the counting value by a predefined value to generate a divided value. The variable frequency divider receives the reference clock, a BCA reproducing signal and the divided value, divides the frequency of the reference clock using the divided value as a divisor of the variable frequency divider to generate the sampling clock, and adjusts the phase of the sampling clock based on the BCA reproducing signal.

### BRIEF DESCRIPTION OF THE DRAWINGS

FIG. 1 is a schematic illustration showing the BCA on an optical disk.
FIG. 2(A) shows the RF signal acquired from the optical disk.
FIG. 2(B) shows BCA reproducing signal generated using a BCA signal reproduction device to process the RF signal.
FIG. 3 is a block diagram showing a conventional apparatus for retrieving the BCA signal.
FIG. 4 is a block diagram showing the implementation architecture of the sampling clock generator for BCA data decoding according to the invention.
FIG. 5 is a block diagram showing the sampling clock generator for BCA data decoding according to a first embodiment of the invention.
FIG. 6 is a block diagram showing the sampling clock generator for BCA data decoding according to a second embodiment of the invention.
FIG. 7 is a block diagram showing a variable frequency divider of the sampling clock generator for BCA data decoding according to the invention.
FIG. 8 is a schematic illustration showing the relation of the BCA reproducing signal, counting value and sampling clock.

### DETAILED DESCRIPTION OF THE INVENTION

The sampling clock generator for BCA data decoding of the invention will be described with reference to the accompanying drawings.

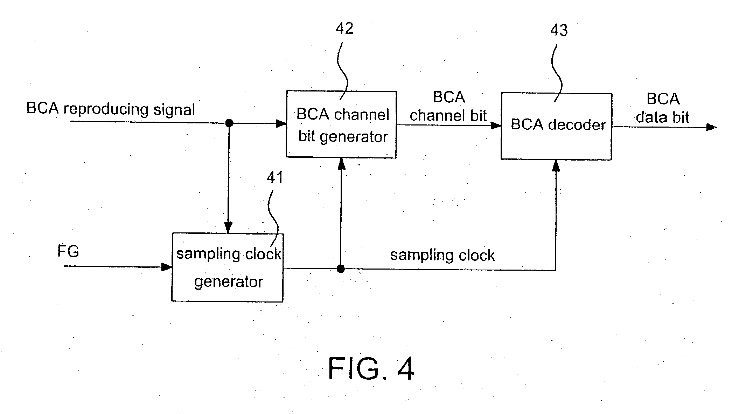

FIG. 4 is a block diagram showing the implementation architecture of the sampling clock generator for BCA data decoding according to the invention. Referring to FIG. 4, the sampling clock generator 41 for BCA data decoding of the invention receives a spindle-motor-speed indicating signal FG and a BCA reproducing signal to generate a sampling clock for BCA data decoding. The sampling clock is supplied to the BCA channel bit generator 42 and the BCA decoder 43. Therefore, the BCA channel bit generator 42 samples the correct BCA channel bit and the BCA decoder 43 decodes the correct BCA data bit based on the sampling clock.

According to the BCA specification, the BCA channel bit rate is 1/(8.89 µs) or 112.49 KHz at the disk rotating speed of 1440 rpm (24Hz). However, if the disk rotating speed deviates from 1440 rpm, the BCA channel bit rate will also deviate from 112.49 KHz. For example, the BCA channel bit rate is 1/(9.85 µs) or 101.55 KHz at a disk rotating speed of 1300 rpm (21.67 Hz). Hence, if the BCA channel bit generator uses a sampling clock with a constant frequency to retrieve the BCA channel bit data, the BCA channel bit data may be correctly retrieved at a standard disk rotating speed. However, if the disk rotating speed deviates far from the standard disk rotating speed, the retrieved BCA channel bit data may be incorrect.

It is assumed that the period of the spindle-motor-speed indicating signal FG is 1/(24 * N), wherein N is an integer, such as 3, 4, 6, and the like, depending on different spindle motor designs. In this case, a period of the spindle-motor-speed indicating signal FG has about 4678/N (i.e., 1/(24*N)/(8 .89* 10⁻⁶)) BCA channel bits. Since the BCA channel bit rate is directly proportional to the frequency of the spindle-motor-speed indicating signal FG, a sampling clock for BCA data decoding with a correct frequency can be provided as long as the frequency of the spindle-motor-speed indicating signal FG is computed based on the relationship of (4678/N).

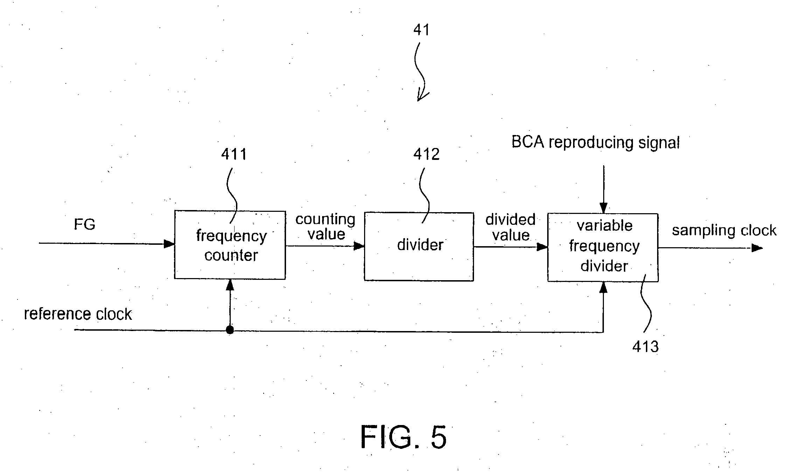

FIG. 5 is a block diagram showing the sampling clock generator for BCA data decoding according to a first embodiment of the invention. The sampling clock generator 41 includes a frequency counter 411, a divider 412, and a variable frequency divider 413 with a variable divisor. Because the invention utilizes a reference clock as a standard clock to generate a sampling clock, the frequency of the reference clock has to be higher than that of the spindle-motor-speed indicating signal FG and that of the sampling clock. For example, the frequency of the reference clock may be 33 MHz. First, the frequency counter 411 receives the spindle-motor-speed indicating signal FG and the reference clock, and counts the number of pulses of the reference clock corresponding to each period of the spindle-motor-speed indicating signal FG to generate a counting value. For example, when the disk rotating speed is 1440 rpm and N is 4, the counting value is about 343.75 K. Next, the divider 412 divides the counting value to scale down the counting value into a divided value. For example, the divisor of the divider 412 is defined according to the relation of the frequency of the spindle-motor-speed indicating signal FG and the BCA channel bit rate, such as about 4678/N. For example, if N is 4, the divisor is about 1196. Consequently, the divided value outputted from the divider 412 is about 287 in this embodiment. Finally, the variable frequency divider 413 divides the frequency of the reference clock according to the divided value to generate a sampling clock. The sampling clock has a frequency substantially equal to 115 KHz in this embodiment. The frequency of 115 KHz deviates from the required frequency 112.5KHz of the sampling clock by less than 5%. This frequency deviation of less than 5% can be compensated using the design of the variable frequency divider by adjusting the phase in order to prevent the channel bit from being incorrectly sampled.

In addition, the frequency of the sampling clock obtained from the sampling clock generator of the invention changes proportionally to the frequency of the spindle-motor-speed indicating signal FG, because the frequency of the spindle-motor-speed indicating signal FG changes with the disk rotating speed. For example, when the disk rotating speed is decreased to 1300 rpm (the variation rate is 10.3%), the counting value in this embodiment substantially becomes 381 K, the divided value becomes 318, and the frequency of the sampling clock becomes 103.8 KHz. Consequently, the frequency of the sampling clock correspondingly decreases 10.3%, and then the system may generate a correct frequency of the sampling clock corresponding to the rotating speed.

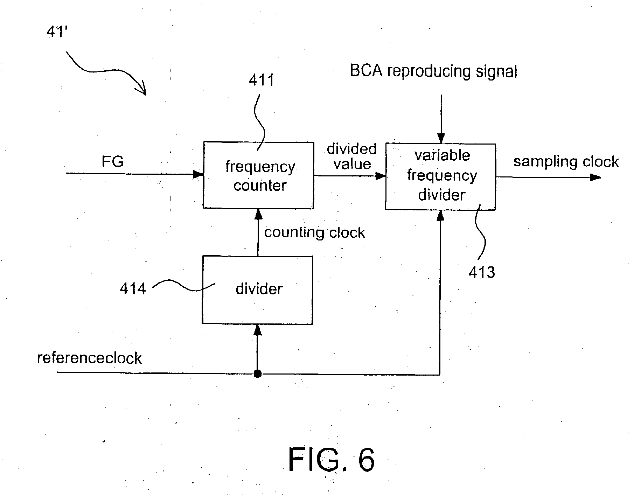

FIG. 6 is a block diagram showing the sampling clock generator for BCA data decoding according to a second embodiment of the invention. In the first embodiment, the sampling clock generator 41 utilizes the frequency counter to generate a counting value, which is then divided by a predefined value to become a divided value. In the second embodiment, however, the sampling clock generator 41' divides the frequency of the reference clock to generate a counting clock, and then utilizes a frequency counter to generate a divided value. The sampling clock generator 41' includes a frequency divider 414, a frequency counter 411, and a variable frequency divider 413 with a variable divisor. Because the invention utilizes a reference clock as a standard clock to generate a sampling clock, the frequency of the reference clock has to be higher than that of the spindle-motor-speed indicating signal FG and that of the sampling clock. For example, the frequency of the reference clock may be 33 MHz. First, the sampling clock generator 41' utilizes the frequency divider 414 to divide the frequency of the reference clock and to generate a counting clock. The frequency divisor of the frequency divider 414 is defined according to relation of the frequency of the spindle-motor-speed indicating signal FG and the BCA channel bit rate, such as about 4678/N. In the second embodiment, for example, the divided value is 1196. Consequently, the frequency of the counting clock generated from the frequency divider 414 is 27.59 KHz. Thereafter, the frequency counter 411 receives the spindle-motor-speed indicating signal FG and counting clock, counts the number of pulses of the counting clock corresponding to each period of the spindle-motor-speed indicating signal FG, and generates a divided value accordingly. For example, when the disk rotating speed is 1440 rpm and N is 4, the divided value is about 287. Finally, the variable frequency divider 413 divides the frequency of the reference clock according to the divided value to generate a sampling clock. The sampling clock has a frequency substantially equal to 115 KHz in this embodiment. The frequency of 115 KHz in this embodiment deviates from the required frequency 112.5KHz of the sampling clock by less than 5%. This frequency deviation of less than 5% may be compensated using the design of the variable frequency divider by adjusting the phase to prevent the channel bit from being incorrectly sampled. According to an additional example, which is not an embodiment of the claimed invention, if the system provides a reference clock with two different frequencies, the frequency divider 414 may be omitted. For example, if the system provides a counting clock and a reference clock whose frequency are integral multiples of the frequency of the counting clock, the frequency divider 414 can be omitted.

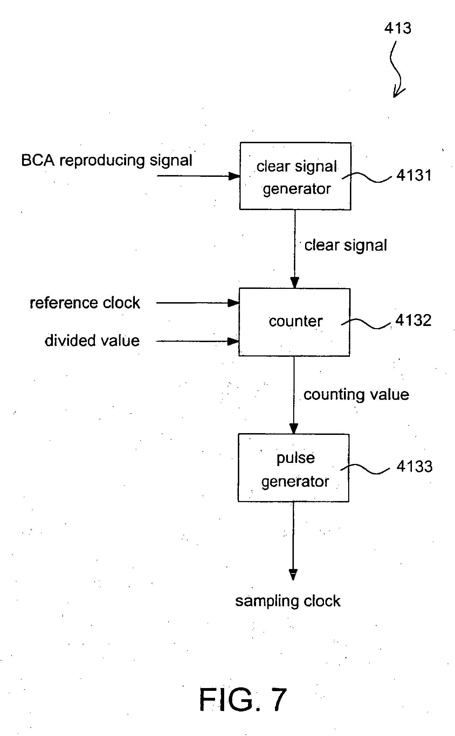

FIG. 7 is a block diagram showing a variable frequency divider. Referring to FIG. 7, the variable frequency divider 413 includes a clear signal generator 4131, a counter 4132, and a pulse generator 4133. The variable frequency divider 413 utilizes the BCA reproducing signal to adjust the phase of the sampling clock so that the generated sampling clock may have a better sampling phase and a minute frequency error in the sampling clock may also be compensated. The variable frequency divider 413 utilizes the clear signal generator 4131 to generate a clear signal according to the BCA reproducing signal. For example, a pulse of a clear signal may be generated at the rising edge of each BCA reproducing signal. The counter 4132 receives the reference clock and the divided value to generate a counting value. The counter 4132 is reset when the counting value equals to the divided value or when the pulse of the clear signal is received. The pulse generator 4133 receives the counting value of the counter 4132, and generates a pulse on the sampling clock when the counting value equals to "A." The pulse width of the sampling clock may be designed according to the requirements. For example, the pulse generator 4133 may output a signal of HIGH when the counting value is between "A" and "A+B," and output a signal of LOW when the counting value is not between "A" and "A+B."

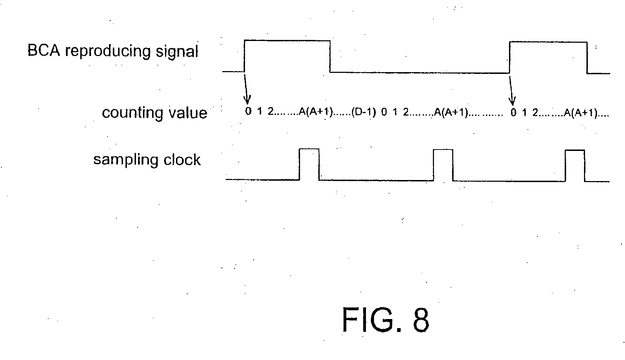

FIG. 8 is a schematic illustration showing the relation of the BCA reproducing signal, counting value and sampling clock. As shown in FIG. 8, the counting value is cleared and reset to 0 at the rising edge of the BCA reproducing signal. Then, when the counting value is "A," the sampling clock generates a pulse. Next, when the counting value is counted to "D" (D is a divided value), the counter is reset to 0 and recount. Since the variable frequency divider 413 utilizes the BCA reproducing signal to adjust the phase, the generation of the sampling clock will never be influenced even if some errors occur in the divided value.

## Claims

1. A method of generating a sampling clock for BCA data decoding in an apparatus for retrieving the BCA signal, comprising:
- receiving a rotation speed indicating signal (FG) of a spindle motor of an optical disk player, the frequency of which changes with a disk rotating speed, **characterised in that** the method comprises receiving a reference clock;
- counting a number of pulses of the reference clock corresponding to each period of the rotation speed indicating signal to generate a first counting value;
- dividing the first counting value by a first predefined value to generate a divided value which corresponds to a number of pulses of the reference clock per bit of the BCA reproducing signal; and
- generating a sampling clock by dividing the frequency of the reference clock using the divided value as a divisor.

2. A method of generating a sampling clock for BCA data decoding in an apparatus for retrieving the BCA signal, comprising:
- receiving a rotation speed indicating signal (FG) of a spindle motor of an optical disk player, the frequency of which changes with a disk rotating speed; **characterised in that** the method comprises
- receiving a reference clock;
- dividing the frequency of the reference clock by a first predefined value to generate a counting clock;
- counting a number of pulses of the counting clock corresponding to each period of the rotation speed indicating signal to generate a divided value which corresponds to a number of pulses of the reference clock per bit of the BCA reproducing signal; and
- generating a sampling clock by dividing the frequency of the reference clock using the divided value as a divisor.

3. The method of claim 1 or 2, further comprising:
- receiving a BCA reproducing signal the frequency of which changes with a disk rotating speed; and
- adjusting the phase of the sampling clock according to the BCA reproducing signal.

4. A sampling clock generator (41) for BCA data decoding in an apparatus for retrieving the BCA signal according to the method of claim 1, comprising:
- a frequency counter (411) adapted to receive a rotation speed indicating signal (FG) of a spindle motor of an optical disk player and the frequency of which changes with a disk rotating speed, and a reference clock, counting a number of pulses of the reference clock corresponding to each period of the rotation speed indicating signal, and generating a first counting value;
- a divider (412) adapted to receive the first counting value of the frequency counter (411), dividing the first counting value by a first predefined value and generating a divided value which corresponds to a number of pulses of the reference clock per bit of a BCA reproducing signal; and
- a variable frequency divider (413) adapted to receive the reference clock, the BCA reproducing signal the frequency of which changes with a disk rotating speed, and the divided value to generate a sampling clock by dividing the frequency of the reference clock using the divided value as a divisor.

5. A sampling clock generator (41') for BCA data decoding in an apparatus for retrieving the BCA signal according to the method of claim 2, comprising:
- a frequency divider (414) adapted to receive a reference clock, dividing the frequency of the reference clock by a first predefined value, and generating a counting clock;
- a frequency counter (411) adapted to receive a rotation speed indicating signal (FG) of a spindle motor of an optical disk player and the frequency of which changes with a disk rotating speed, counting a number of pulses of the counting clock corresponding to each period of the rotation speed indicating signal, and generating a divided value which corresponds to a number of pulses of the reference clock per bit of a BCA reproducing signal;
- a variable frequency divider (413) adapted to receive the reference clock, the BCA reproducing signal the frequency of which changes with a disk rotating speed, and the divided value to generate a sampling clock by dividing the frequency of the reference clock using the divided value as a divisor.

6. The sampling clock generator according to claim 4 or 5, wherein the variable frequency divider (413) is further configured to adjust the phase of the sampling clock according to the BCA reproducing signal

7. The sampling clock generator according to claim 4, 5 or 6, wherein the variable frequency divider (413) comprises:
- a clear signal generator (4131) for generating a clear signal according to the BCA reproducing signal;
- a counter (4132) for receiving the reference clock and the divided value, outputting a counting value, and clearing the counting value when the clear signal is enabled; and
- a pulse generator (4133) for receiving the counting value and generating a sampling pulse on the sampling clock when the counting value equals to a second predefined value.

8. The sampling clock generator according to claim 7, wherein the clear signal generator (4131) enables the clear signal for a period of time at a rising edge of the BCA reproducing signal.

## Patentansprüche

1. Verfahren zum Erzeugen eines Abtasttakts für ein BCA-Datendecodieren in einer Vorrichtung zum Gewinnen des BCA-Signals, das umfasst:
- Empfangen eines drehzahlangebenden Signals (FG) eines Spindelmotors eines Spielers einer optischen Disk, dessen Frequenz sich mit einer Diskdrehzahl ändert, **dadurch gekennzeichnet, dass** das Verfahren umfasst, einen Referenztakt zu empfangen;
- Zählen einer Anzahl von Impulsen des Referenztakts, die jeder Periode des drehzahlangebenden Signals entsprechen, um einen ersten Zählwert zu erzeugen;
- Teilen des ersten Zählwerts durch einen ersten vordefinierten Wert, um einen geteilten Wert zu erhalten, der einer Anzahl von Impulsen des Referenztakts pro Bit des BCA-Wiedergabesignals entspricht; und
- Erzeugen eines Abtasttakts durch Teilen der Frequenz des Referenztakts unter Verwendung des geteilten Werts als Teiler.

2. Verfahren zum Erzeugen eines Abtasttakts für ein BCA-Datendecodieren in einer Vorrichtung zum Gewinnen des BCA-Signals, das umfasst:
- Empfangen eines drehzahlangebenden Signals (FG) eines Spindelmotors eines Spielers einer optischen Disk, dessen Frequenz sich mit einer Diskdrehzahl ändert, **dadurch gekennzeichnet, dass** das Verfahren umfasst
- Empfangen eines Referenztakts;
- Teilen der Frequenz des Referenztakts durch einen ersten vordefinierten Wert, um einen Zähltakt zu erzeugen;
- Zählen einer Anzahl von Impulsen des Zähltakts, die jeder Periode des drehzahlangebenden Signals entsprechen, um einen geteilten Wert zu erhalten, der einer Anzahl von Impulsen des Referenztakts pro Bit des BCA-Wiedergabesignals entspricht; und
- Erzeugen eines Abtasttakts durch Teilen der Frequenz des Referenztakts unter Verwendung des geteilten Werts als Teiler.

3. Verfahren nach Anspruch 1 oder 2, das ferner umfasst:
- Empfangen eines BCA-Wiedergabesignals, dessen Frequenz sich mit einer Diskdrehzahl ändert; und
- Anpassen der Phase des Abtasttakts gemäß dem BCA-Wiedergabesignal.

4. Abtasttaktgenerator (41) für ein BCA-Datendocodieren in einer Vorrichtung zum Gewinnen des BCA-Signals gemäß dem Verfahren nach Anspruch 1, der umfasst:
- einen Frequenzzähler (411), der ausgelegt ist, ein drehzahlangebendes Signal (FG) eines Spindelmotors eines Spielers einer optischen Disk, dessen Frequenz sich mit einer Diskdrehzahl ändert, und einen Referenztakt zu empfangen, und der eine Anzahl von Impulsen des Referenztakts, die jeder Periode des drehzahlangebenden Signals entsprechen, zählt und einen ersten Zählwert erzeugt;
- einen Teiler (412), der ausgelegt ist, den ersten Zählwert des Frequenzzählers (411) zu empfangen, und der den ersten Zählwert durch einen ersten vordefinierten Wert teilt und einen geteilten Wert erzeugt, der einer Anzahl von Impulsen des Referenztakts pro Bit eines BCA-Wiedergabesignals entspricht; und
- einen variablen Frequenzteiler (413), der ausgelegt ist, den Referenztakt, das BCA-Wiedergabesignal, dessen Frequenz sich mit einer Diskdrehzahl ändert, und den geteilten Wert zu empfangen, um einen Abtasttakt durch Teilen der Frequenz des Referenztakts unter Verwendung des geteilten Werts als einem Teiler zu erzeugen.

5. Abtasttaktgenerator (41') für ein BCA-Datendecodieren in einer Vorrichtung zum Gewinnen des BCA-Signals gemäß dem Verfahren nach Anspruch 2, der umfasst:
- einen Frequenzteiler (414), der ausgelegt ist, einen Referenztakt zu empfangen, und der die Frequenz des Referenztakts durch einen ersten vordefinierten Wert teilt und einen Zähltakt erzeugt;
- einen Frequenzzähler (411), der ausgelegt ist, ein drehzahlangebendes Signal (FG) eines Spindelmotors eines Spielers einer optischen Disk zu empfangen, dessen Frequenz sich mit der Diskdrehzahl ändert, und der eine Anzahl von Impulsen des Zähltakts, die jeder Periode des drehzahlangebenden Signals entsprechen, zählt und einen geteilten Wert erzeugt, der einer Anzahl von Impulsen des Referenztakts pro Bit eines BCA-Wiedergabesignals entspricht;
- einen variablen Frequenzteiler (413), der ausgelegt ist, den Referenztakt, das BCA-Wiedergabesignal, dessen Frequenz sich mit einer Diskdrehzahl ändert, und den geteilten Wert zu empfangen, um einen Abtasttakt durch Teilen der Frequenz des Referenztakts unter Verwendung des geteilten Werts als einem Teiler zu erzeugen.

6. Abtasttaktgenerator nach Anspruch 4 oder 5, wobei der variable Frequenzteiler (413) ferner konfiguriert ist, die Phase des Abtasttakts gemäß dem BCA-Wiedergabesignal anzupassen.

7. Abtasttaktgenerator nach Anspruch 4, 5 oder 6, wobei der variable Frequenzteiler (413) umfasst:
- einen Generator eines Löschsignals (4131) zum Erzeugen eines Löschsignals gemäß dem BCA-Wiedergabesignal;
- einen Zähler (4132) zum Empfangen des Referenztakts und des geteilten Werts Ausgeben eines Zählwerts und Löschen des Zählwerts, wenn das Löschsignal aktiviert ist; und
- einen Impulsgenerator (4133) zum Empfangen des Zählwerts und Erzeugen eines Abtastimpulses auf dem Abtasttakt, wenn der Zählwert mit einem zweiten vordefinierten Wert übereinstimmt.

8. Abtasttaktgenerator nach Anspruch 7, wobei der Löschsignalgenerator (4131) das Löschsignal für eine Zeitdauer an einer steigenden Kante des BCA-Wiedergabesignals aktiviert.

## Revendications

1. Procédé de génération d'une horloge d'échantillonnage pour un décodage de données BCA dans un appareil pour extraire le signal BCA, comprenant :
- la réception d'un signal d'indication de vitesse de rotation (FG) d'un moteur d'axe d'un lecteur de disque optique dont la fréquence change avec une vitesse de rotation de disque, **caractérisé en ce que** le procédé comprend la réception d'une horloge de fréquence ;
- le comptage d'un nombre d'impulsions de l'horloge de référence correspondant à chaque période du signal d'indication de vitesse de rotation pour générer une première valeur de comptage ;
- la division de la première valeur de comptage par une première valeur prédéfinie pour générer une valeur divisée qui correspond à un nombre d'impulsions de l'horloge de référence par bit du signal de reproduction BCA ; et
- la génération d'une horloge d'échantillonnage en divisant la fréquence de l'horloge de référence en utilisant la valeur divisée en tant que diviseur.

2. Procédé de génération d'une horloge d'échantillonnage pour un décodage de données BCA dans un appareil pour extraire le signal BCA, comprenant :
- la réception d'un signal d'indication de vitesse de rotation (FG) d'un moteur d'axe d'un lecteur de disque optique dont la fréquence change avec une vitesse de rotation de disque ;
**caractérisé en ce que** le procédé comprend
- la réception d'une horloge de référence ;
- la division de la fréquence de l'horloge de référence par une première valeur prédéfinie pour générer une horloge de comptage ;
- le comptage d'un nombre d'impulsions de l'horloge de comptage correspondant à chaque période du signal d'indication de vitesse de rotation pour générer une valeur divisée qui correspond à un nombre d'impulsions de l'horloge de référence par bit du signal de reproduction BCA ; et
- la génération d'une horloge d'échantillonnage en divisant la fréquence de l'horloge de référence en utilisant la valeur divisée en tant que diviseur.

3. Procédé selon la revendication 1 ou 2, comprenant en outre :
- la réception d'un signal de reproduction BCA dont la fréquence change avec une vitesse de rotation de disque ; et
- l'ajustement de la phase de l'horloge d'échantillonnage en fonction du signal de reproduction BCA.

4. Générateur d'horloge d'échantillonnage (41) pour un décodage de données BCA dans un appareil pour extraire le signal BCA selon le procédé de la revendication 1, comprenant :
- un compteur de fréquences (411) apte à effectuer la réception d'un signal d'indication de vitesse de rotation (FG) d'un moteur d'axe d'un lecteur de disque optique dont la fréquence change avec une vitesse de rotation de disque, et une horloge de fréquence effectuant le comptage d'un nombre d'impulsions de l'horloge de référence correspondant à chaque période du signal d'indication de vitesse de rotation et la génération d'une première valeur de comptage ;
- un diviseur (412) apte à effectuer la réception de la première valeur de comptage (411), la division de la première valeur de comptage par une première valeur prédéfinie et la génération d'une valeur divisée qui correspond à un nombre d'impulsions de l'horloge de référence par bit du signal de reproduction BCA ; et
- un diviseur de fréquence variable (413) apte à effectuer la réception de l'horloge de référence, le signal de reproduction BCA dont la fréquence change avec une vitesse de rotation de disque et la valeur divisée pour générer une horloge d'échantillonnage en divisant la fréquence de l'horloge de référence en utilisant la valeur divisée en tant que diviseur.

5. Générateur d'horloge d'échantillonnage (41') pour un décodage de données BCA dans un appareil pour extraire le signal BCA selon le procédé de la revendication 2, comprenant :
- un diviseur de fréquences (414) apte à effectuer la réception d'une horloge de référence, la division de la fréquence de l'horloge de référence par une première valeur prédéfinie, et la génération d'une horloge de comptage ;
- un compteur de fréquences (411) apte à effectuer la réception d'un signal d'indication de vitesse de rotation (FG) d'un moteur d'axe d'un lecteur de disque optique dont la fréquence change avec une vitesse de rotation de disque, le comptage d'un nombre d'impulsions de l'horloge de comptage correspondant à chaque période du signal d'indication de vitesse de rotation, et la génération d'une valeur divisée qui correspond à un nombre d'impulsions de l'horloge de référence par bit du signal de reproduction BCA ;
- un diviseur de fréquence variable (413) apte à effectuer la réception de l'horloge de référence, le signal de reproduction BCA dont la fréquence change avec une vitesse de rotation de disque, et la valeur divisée pour générer une horloge d'échantillonnage en divisant la fréquence de l'horloge de référence en utilisant la valeur divisée en tant que diviseur.

6. Générateur d'horloge d'échantillonnage selon la revendication 4 ou 5, dans lequel le diviseur de fréquence variable (413) est en outre configuré pour ajuster la phase de l'horloge d'échantillonnage en fonction du signal de reproduction BCA.

7. Générateur d'horloge d'échantillonnage selon la revendication 4, 5 ou 6, dans lequel le diviseur de fréquence variable (413) comprend :
- un générateur de signal d'effacement (4131) pour effectuer la génération d'un signal d'effacement en fonction du signal de reproduction BCA ;
- un compteur (4132) pour effectuer la réception de l'horloge de référence et de la valeur divisée, la sortie d'une valeur de comptage et l'effacement de la valeur de comptage lorsque le signal d'effacement est activé ; et
- un générateur d'impulsions (4133) pour effectuer la réception de la valeur de comptage et la génération d'une impulsion d'échantillonnage sur l'horloge d'échantillonnage lorsque la valeur de comptage est égale à une deuxième valeur prédéfinie.

8. Générateur d'horloge d'échantillonnage selon la revendication 7, dans lequel le générateur de signal d'effacement (4131) active le signal d'effacement pendant une période de temps à un front montant du signal de reproduction BCA.
